(19)

Europäisches
Patentamt
European
Patent Office
Office européen
des brevets

(11) **EP 4 310 758 A1**

(12) **EUROPEAN PATENT APPLICATION**
published in accordance with Art. 153(4) EPC

(43) Date of publication:
**24.01.2024 Bulletin 2024/04**

(21) Application number: **21936849.5**

(22) Date of filing: **15.04.2021**

(51) International Patent Classification (IPC):
***G06Q 30/02*** *(2023.01)*

(52) Cooperative Patent Classification (CPC):
**G06Q 30/02**

(86) International application number:
**PCT/ES2021/070249**

(87) International publication number:
**WO 2022/219206 (20.10.2022 Gazette 2022/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Telefonica Iot & B IG Data Tech
28050 Madrid (ES)**

(72) Inventors:
• **BARBADO GONZÁLEZ, Alberto
28050 Madrid (ES)**

• **ALONSO BAIGORRI, Pedro Antonio
28050 Madrid (ES)**
• **PÉREZ ROSADO, Federico
28050 Madrid (ES)**
• **GARCÍA FERNÁNDEZ, Daniel
28050 Madrid (ES)**
• **SÁNCHEZ PÉREZ, Álvaro
28050 Madrid (ES)**

(74) Representative: **Carlos Hernando, Borja
Garrigues IP, S.L.P.
Hermosilla, 3
28001 Madrid (ES)**

(54) **COMPUTER-IMPLEMENTED METHOD, COMPUTER SYSTEM AND PROGRAMS FOR THE OPTIMISATION OF A USER'S TELEPHONE LINES**

(57) A computer-implemented method, a computer system and programs are disclosed, for the optimisation of a user's telephone lines. The method collects communications data related to each of the telephone lines of a group of users, and stores the data. Each user has several lines, and the data include voice and data traffic. The method optimises the lines of a particular user using AI algorithms that process the data stored by means of: combining the data with specific information on the tariffs associated with the lines, providing a franchise information; comparing the consumption of each line by means of the aggregation of the first franchise to a number of billing cycles; providing the lines with a first or a second alert, depending on the comparison; recommending a change of tariff for the lines having the first alert; and adjusting the recommendation, using a series of pre-set rules.

Figure 1

EP 4 310 758 A1

**Description**

Technical field

The present invention relates to a method, computer system and programs for the optimisation of a user's telephone lines.

Background of the invention

At present, tariff recommendations and negotiations are done manually, where the lines that should be changed to a tariff where the franchise is best adjusted to the real use of the line are proposed.
New methods and systems which automatically optimise a user's telephone lines are therefore needed.

Disclosure of the invention

One object of the present invention is to provide a solution which allows the automation of the process for the optimisation of a user's telephone lines (particularly a client of a telecommunications operator), wherein there coexist business rules that must be considered in the recommendations, together with machine learning (ML) models which contribute to the optimisation of the recommender system. These machine learning models can include prediction (*forecast*) models for future consumption and clustering predictions for the profiling and segmentation of the lines based on the behaviour and use of tariffs.
For such purpose, embodiments of the present invention provide, according to a first aspect, a method for the optimisation of a user's telephone lines. The method comprises a processing unit collecting, during a specific period of time, communications data related to each of the telephone lines of a group of users, and storing the collected data in a memory or database, wherein each user of the group of users comprises a plurality of lines, and wherein the communications data include voice and data traffic; and optimising the lines of a particular user using one or more artificial intelligence algorithms that process(es) the stored communications data associated with said particular user by means of executing the following steps:

- combining the communications data with specific information on the characteristics of the tariffs associated with each of the lines, providing a first franchise information as a result;
- comparing the consumption of each of the lines by means of the aggregation of the first franchise information to a number of billing cycles;
- providing the lines with a first alert or a second alert, depending on a result of said comparison;
- recommending a change of tariff for the lines having the first alert; and
- adjusting the recommendation based on a series of pre-set rules.

In one embodiment, the algorithm/algorithms further comprise(s) predicting a future consumption model of the lines and adapting the recommendation adjusted based on the forecast future consumption model.
Particularly, the prediction of the future consumption model is performed only for the lines having the first alert.
In one embodiment, the prediction of the future consumption model is performed: obtaining a daily consumption predicted for the next N days using a seasonal autoregressive integrated moving average algorithm, and correcting said daily consumption obtained using a distributed gradient boosting algorithm.
In one embodiment, the prediction of the future consumption model is performed using a recurrent neural network.
In one embodiment, the recommendation of the change of tariff comprises a recommendation of a tariff increase or decrease.
In one embodiment, the provision of the first alert or of the second alert is performed by taking into consideration a billing time interval of the lines.
In one embodiment, the method further executes a clustering algorithm which clusters together lines with a similar communications data pattern in one and the same cluster. For example, the clustering algorithm can include at least one of: a Gaussian mixture modelling (GMM) algorithm; a k-means algorithm; a latent Dirichlet allocation (LDA) algorithm; or a hierarchical clustering algorithm, among others.
In one embodiment, the series of pre-set rules comprise one or more of: an indication of whether to prioritise recommendations of data-over-voice, an indication of the number of consecutive or non-consecutive months necessary for a line to execute a recommendation, an indication of the franchise data and/or voice usage percentage that generates the first alert, an indication of the franchise data and/or voice usage percentage that generates the second alert, an indication of the franchise data usage percentage that generates a recommendation, an indication of the minutes after which recommendations are made when the franchise is a pay-per-use franchise.

Other embodiments of the invention disclosed herein also include a computer system and program products to perform the steps and operations of the method proposed in the first aspect of the invention. More particularly, a computer program product is an embodiment that has a computer-readable medium including computer program instructions encoded therein which, when executed in at least one processor of a computer system, cause the processor to perform the operations indicated herein as embodiments of the invention.

The present invention offers an advanced and robust analytical solution with an artificial intelligence (AI) system which extracts insights about the communications data of the users/clients to help them to optimise their telephone lines and to contribute to data-based decision making.

The present invention reinforces the commitment to transparency and reliability with users and increases the value provided by the communication services in order to reinforce the proposed value thereof, and therefore to increase the satisfaction of the users with said services.

Brief description of the drawings

The above and other features and advantages will be more fully understood from the following detailed description of several merely illustrative and non-limiting embodiments, in reference to the attached drawings, in which:

Figure 1 schematically shows the operation of the system proposed for the optimisation of a user's telephone lines.

Figure 2 is a flow chart showing an embodiment of the proposed method.

Figure 3 schematically illustrates the design followed by the system upon including the prediction model.

Figures 4A and 4B show an example of the visualisation of the clustering.

Detailed description of the invention and embodiments

The present invention provides a method and a system for the optimisation of a user/client's telephone lines. To that end, the invention provides a mobile and fixed analysis module, where there is provided information on the use of a user's or company's mobile lines. In that sense, the input datum in this case will be the communications data characteristic of the telecommunications operator for each user/client gathering information on the voice and call traffic of said lines.

In the mobile and fixed analysis module there is a submodule called artificial intelligence (AI), including tariff change recommendations for the company's lines, proposing both upgrades to higher franchise tariffs and downgrades to lower franchise tariffs. These recommendations are performed by means of a recommender system (RecSys) 100.

Generally speaking, the recommender system 100 has three starting data sources. On one hand, information on the call traffic and data usage coming from the CDR (call detail record) and XDR (data record) of the telecommunications operator. This information will be aggregated daily so as to have an overview per line and day of their consumption.

This information on call traffic will be combined with the specific detail of the characteristics of the tariffs associated with the different lines. Information at the franchise level (voice and data) on each of the tariffs each line has on a specific day will thereby be available. This information will be aggregated at the billing cycle level to enable comparison of the consumption of each line with respect to the franchises (voice and data) of the tariff thereof.

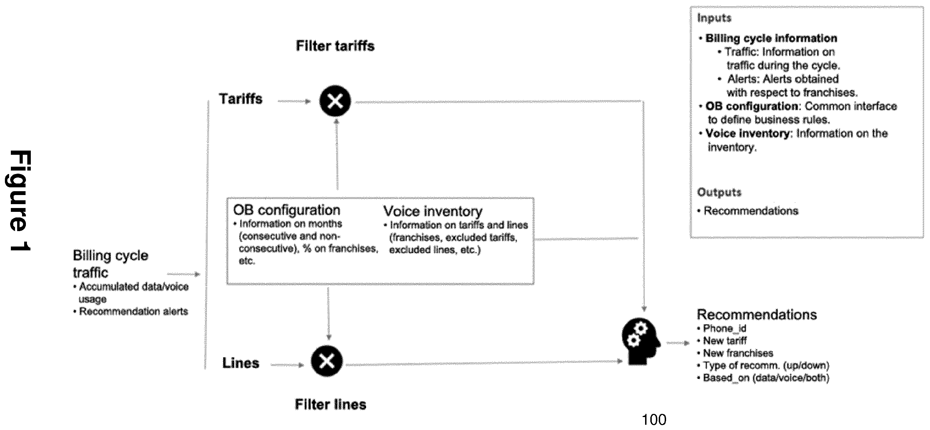

Lastly, the recommender system 100 will adjust its recommendations based on a series of business rules that each operator (or OB) may define. This information on configuration will be specified by the OB by means of a simple interface that will allow transformation of the input information into rules in the recommender system 100. The preceding process is reflected in Figure 1.

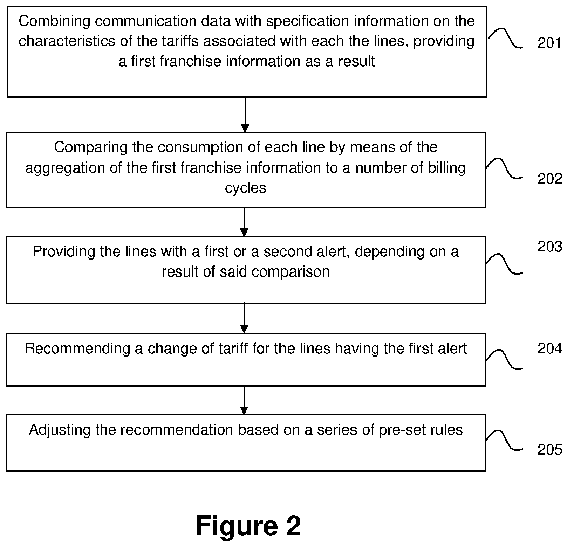

Figure 2 illustrates another example of the proposed method. In this case, the optimisation of the lines is performed, for a specific user/client, using one or more AI algorithms, by combining, step 201, the communications data with specific information on the characteristics of the tariffs associated with each of the lines, providing a first franchise information as a result; comparing, step 202, the consumption of each of the lines by means of the aggregation of the first franchise information to a number of billing cycles; providing, step 203, the lines with a first or a second alert, depending on a result of said comparison; recommending, step 204, a change of tariff for the lines having the first alert; and adjusting, step 205, the recommendation based on a series of pre-set rules.

In some embodiments, together with the mentioned sources of information and recommendation process, the recommender system 100 further includes two additional elements based on machine learning. First, the information on the traffic of the different historical billing cycles is complemented with the consumption predicted for the next billing cycle with prediction models. The recommendations will thereby be adjusted based on the predicted future consumption.

Lastly, the recommendations of tariffs from the catalogue of tariffs available will be weighted based on the use of tariffs by other lines of the user. This is done by means of using clustering models.

The different features of the present invention are described in greater detail below, according to one or more embodiments.

1. Framework for the definition of business rules

The recommender system 100 for the mobile and fixed analysis module needs information to be provide by the OB as business rules. This information is provided from an editable panel, for example in Django, in case the OB needs to modify its business rules. Said information is subsequently stored in the database. Therefore, is defined a framework common to all the OBs with a series of fields with which customised business rules will be generated to cover the particular needs of each OB. This source of data will be referred to as ob_config.

The fields that can be defined in this framework are the following:

Field - Detail (Text) (The values defined in the text will be the applied to validate the fields)

- email_support - The support email will be added to clients of the OB. (Text) For the email to be valid, it must contain an "@" and at least one "."

- billing_day - The company's billing date

    (Text) For the date to be valid, it must have a whole value within the range [1-28].

    (Text) In the event that the billing date exceeds day 28, it is recommended to include the value 1

- data_over_voice - True/False indicating whether recommendations of data-over-voice are prioritised.
  (Text) A value "true" or "false" value must be selected.

- up_num_months_data - Number of consecutive months needed for a line in alert to be executed in the recommender.
  (Text) The number of consecutive months will be a whole value within the range [1-12].

- up_num_months_memory_data - Number of non-consecutive months needed for a line in alert to be executed in the recommender.
  (Text) The number of consecutive months will be a whole value within the range [1-12]. By including the value -1, the rule of non-consecutive months will not be applied.

- up_per_fr_data_a1 - % of franchise data usage that generates an alert 1 (e.g.: 80% of the franchise)
  (Text) The percentage it sets when a type 1 alert is produced will be a whole value in the range [1-100]. By including the value -1, this alert will not be calculated.

- up_per_fr_data_a2 - % of franchise data usage that generates an alert 2 (e.g.: 100% of the franchise)
  (Text) The percentage it sets when a type 2 alert is produced will be a whole value in the range [1-100]. By including the value -1, this alert will not be calculated.

- up_per_fr_data_r1 - % of franchise data usage that generates a recommendation (e.g.: 95% of the franchise)
  (Text) The percentage it sets when a type 1 recommendation is produced will be a whole value in the range [1-100]. By including the value -1, this recommendation will not be calculated.

- up_num_months_voice - Number of consecutive months needed for a line in alert to be executed in the predictor
  (Text) The number of consecutive months will be a whole value within the range [1-12].

- up_num_months_memory_voice - Number of non-consecutive months needed for a line in alert to be executed in the predictor
  (Text) The number of consecutive months will be a whole value within the range [1-12]. By including the value -1, the rule of non-consecutive months will not be applied.

- up_per_fr_voice_a1 - % of franchise voice usage that generates an alert 1 (e.g.: 80% of the franchise)
  (Text) The percentage it sets when a type 1 alert is produced will be a whole value in the range [1-100]. By including the value -1, this alert will not be calculated.

- up_per_fr_voice_a2 - % of franchise voice usage that generates an alert 2 (e.g.: 80% of the franchise)
  (Text) The percentage it sets when a type 2 alert is produced will be a whole value in the range [1-100]. By including the value -1, this alert will not be calculated.

- up_per_fr_voice_r1 - % of franchise voice usage that generates a recommendation (e.g.: 95% of the franchise)
  (Text) The percentage it sets when a type 1 recommendation is produced will be a whole value in the range [1-100]. By including the value -1, this recommendation will not be calculated.

- down_num_months_data - Number of consecutive months needed for a line in alert to be executed in the predictor
  (Text) The number of consecutive months will be a whole value within the range [1-12].

- down_num_months_memory_data - Number of non-consecutive months needed for a line in alert to be executed in the predictor
  (Text) The number of non-consecutive months will be a whole value within the range [1-12]. By including the value -1, the rule of non-consecutive months will not be applied.

- down_per_fr_data_r1 - % of the use of data franchise that generates a recommendation (e.g.: 30% of the franchise)
  (Text) The percentage it sets when a type 1 recommendation is produced will be a whole value in the range [1-100]. By including the value -1, this recommendation will not be calculated.

- down_num_months_voice - Number of consecutive months needed for a line in alert to be executed in the predictor
  (Text) The number of consecutive months will be a whole value within the range [1-12].

- down_num_months_memory_voice - Number of non-consecutive months needed for a line in alert to be executed in the predictor
  (Text) The number of consecutive months will be a whole value within the range [1-12]. By including the value -1, the rule of non-consecutive months will not be applied.

- down_per_fr_voice_r1 - % of franchise voice usage that generates a recommendation (e.g.: 30% of the franchise)
  (Text) The percentage it sets when a type 1 recommendation is produced will be a whole value in the range [1-100]. By including the value -1, this recommendation will not be calculated.

- ppu_threshold_up_voice - Minutes after which recommendations are made when the franchise is ppu (pay-per-use) (e.g.: 100 minutes)
  (Text) The number of minutes must be a whole value >=1. By including the value -1, recommendations in ppu will not be applied.

- ppu_threshold_down_voice - Minutes after which recommendations are made when the franchise is ppu (Pay-per-use) (e.g.: 100 minutes)
  (Text) The number of minutes must be a whole value >=1. By including the value -1, recommendations in ppu will not be applied.

The following table illustrates a particular example of the previous fields:

Table 1

| Field | Value |
|---|---|
| email_support | comms-support@telefonica.com |
| billing_day | 17 |
| data_over_voice | True |
| up_num_months data | 2 |
| up_num_months_memory_data | 4 |
| up_per fr data a1 | 80 |
| up_per fr data a2 | 100 |

(continued)

| Field | Value |
|---|---:|
| up_per fr data_r1 | 80 |
| up_num_months voice | 2 |
| up_num_months_memory_voice | 4 |
| up_per_fr_voice_a1 | 80 |
| up_per_fr_voice_a2 | 100 |
| up_per fr voice_r1 | 80 |
| down_num_months_data | 3 |
| down_num_months_memory_data | -1 |
| down_per_fr_data_r1 | 30 |
| down_num_months_voice | 3 |
| down_num_months_memory_voice | -1 |
| down_per_fr_voice_r1 | 1 |
| ppu_threshold_up_voice | 100 |
| ppu_threshold_down_voice | -1 |

2. Other sources of data

Tariff inventory

Together with this information for generating generic business rules for the recommender system 100, information on the catalogue of tariffs that will be recommended is in turn included. These tariffs will be the items that the recommender system 100 will propose for each of the lines of the company/user. This source of data will be referred to as inventory_tariffs.

- tariff_id: Unique identifier of each tariff. Those provided from URM will be maintained.
- tariff_description: Description of the tariff. Those provided from URM will be maintained.
- tariff voice_bundled: Voice franchise limit (Min).
- tariff_data_bundled: Data franchise limit (Mb).
- group_id: Unique identifier that identifies the families to which the individual tariffs belong.
- group_des: Name associated with the group_id.
- subgroup: Flag used to indicate if a tariff of a specific group can only receive recommendations from another subgroup (1) or if it can receive them from any of group (0). For example, if only changes from a FR (flat-rate) tariff to another FR tariff are to be recommended, the lines of a group with a FR would have 1 in this field.
- is_new: Identifies whether or not the tariff is new in the catalogue.
- do_not_recommend: Identifies whether or not the tariff can be recommended.
- is_excluded: When is_excluded=T, lines with these tariffs cannot receive any recommendation.
- hierarchy: Hierarchy to be considered when the tariffs have the same franchises.

The franchise fields may contain the following key words.

- FR = Flat rate
- PPU = Pay-per-use
- ET = Exclusive tariff

Consumption of lines in billing cycles

Together with the previous sources, information on the consumption (voice and data) in the different billing cycles for each line is further needed. This source of data will be referred to as df billing cycle_input. The fields appearing in this table are:

- phone_id: Telephone line
- billing_cycle_period: Billing month (DD/MM/YYYY-DD/MM/YYYY)
- billing_cycle_id: Numerical ID for the auto-incremental periods
- data_consumption: Data consumption for a line in a billing cycle (Bytes)
- voice_consumption: Voice consumption for a line in a billing cycle (minutes)
- consumption_alert_data_id: The field will be filled in with the following value for each line based on the following rules:

  0 - There is no data consumption alert
  1 - data_consumption > up_per_fr_data_a1*tariff_data_bundled and data_consumption< up_per_fr_data_a2*tariff_data_bundled
  2 - data_consumption < up_per_fr_data_a2*tariff_data_bundled

- consumption_alert_voice: The field will be filled in with the following value for each line based on the following rules

  0 - there is no voice consumption alert
  1 - voice_consumption > up_per_fr_voice_a1*tariff_voice_bundled and voice_consumption< up_per fr voice a2*tariff voice_bundled
  2 - voice_consumption > up_per_fr_voice_a2*tariff_voice_bundled

- recommender_alert_data: The field will be filled in with the following value for each line based on the following rules:

  0 - there is no data recommendation alert
  1 - data_consumption > up_per fr data_r1*tariff data_bundled
  2 - data_consumption < down_per fr data_r1*tariff data_bundled

- recommender_alert_voice: The field will be filled in with the following value for each line based on the following rules:

  0 - there is no alert of recommendation of voice
  1 - voice_consumption > up_per_fr_voice_r1*tariff_voice_bundled
  2 - voice_consumption < down_per_fr_voice_r1*tariff_voice_bundled

- comms_group: id of the client owning the line

3. Description of the algorithm

The recommender system 100 will receive as inputs the following fields:

1. Data containing the accumulated consumption (bytes/duration) for each line and each billing cycle. These fields are derived directly from the df billing_cycle_input table, with the exception of two fields (*data_consumption_predicted* and *voice_consumption_predicted*) which will be obtained with a machine learning model for prediction (as will be described in detail in section 4.). This input table will be referred to as df_input. Its fields are:

- phone_id {int}: Telephone number
- billing_cycle_id {int}: ID of the billing cycle (e.g., 1, 2, etc.)
- data_consumption {float}: Aggregated data usage in MB for that line and billing cycle
- voice_consumption {float}: Aggregated voice usage in Min for that line and billing cycle
- tariff_id {int}: Tariff associated with that line in that billing cycle
- comms_group {int}: unique ID of the client
- consumer_alert_data_id {float}: Alerts for the recommendation based on byte usage (0: no alert, 1: recommendation update threshold exceeded, 2: under the threshold for downgrades)
- consumer alert voice_id {float}: Alerts for the recommendation based on minute usage (0: no alert, 1: recommendation update threshold exceeded, 2: under the threshold for downgrades)
- year_dt {int}: Year for that billing cycle
- data_consumption_predicted {int}: In case of having the value of the predictions, data consumption predicted for the next billing cycle. Predetermined value -1. If the value is -1, it is not considered for the recommendations.
- voice_consumption_predicted {int}: In case of having the value of the predictions, voice consumption predicted for the next billing cycle. Predetermined value -1. If the value is -1, it is not considered for the recommendations.

- direction {int}: 0 incoming call/1 outgoing call

2. Data containing the information on the tariffs for all the lines of that comms_group. Same fields as those defined in the inventory_tariffs.
3. Data containing the specified rules of ob_config.

The steps followed by the recommender system 100 are:
1. Load data: load the relevant information on the sources of data (as mentioned above)
2. Obtain the lines for the recommender system 100: by using the information on the alerts for the recommender system 100, the lines susceptible to recommendations based on upgrade/downgrade alerts for data/voice are selected.
3. Obtain possible tariffs to be recommended: Out of all the tariffs, only those associated with each client are used for the possible recommendations. The way to know this is to consider as tariffs for that client those associated with their lines in the historical data.
4. Find the best tariff: Using the lines and tariffs obtained in steps 2 and 3, the tariff recommended for each of those lines is obtained.
4.1 First, the lines that cannot receive recommendations are filtered, even if they have alerts. Using the field *is_excluded* present in inventory_tariffs, the recommender system 100 filters the lines having a tariff that should not be modified. Only when it is False are they used. When a line has a tariff with the field a True, it is excluded.
4.2 Then, the tariffs in inventory_tariffs which cannot be used in the recommendations are filtered. Both tariffs with *do_not_recommend* or with *is_excluded* in True must be discarded.
4.3 Then, lines that do not meet the criteria consecutive and non-consecutive months, with alerts in the line history, are re-filtered. For the upgrade, only the lines having upgrade alerts during the last N billing cycles are maintained, with N being defined in *up_num_months_data* (for data alerts) or *up_num_months_voice* (for voice alerts) or both. It also maintains those that have non-consecutive alerts occurring during the last 12 billing cycles. The number of non-consecutive billing cycles is defined in *up_num_months_memory_data* (for data) and *up_num_months_memory_voice* (for voice). Similarly for the downgrade, but with the fields *down_num_months_data* and *down_num_months_voice* (consecutive months), and *down_num_months_memory_data* and *down_num_months_memory_voice* (non-consecutive months).
4.3.1 Particularly, for a line to be recommended, it must always have a recommendation alert in the last month, on the basis of which it will be determined whether the recommendation is an upgrade or downgrade. If there is no alert in the last month, it will not be recommended.

For a line to be recommended, it must always have alerts of the same type (for the consecutive case, *up_num_months_voice*/*data* upgrade alerts or *down_num_months_voice*/*data* downgrade alerts). They shall never be counted together (1 alert of upgrade and 1 alert downgrade != 2 alerts)

The following table shows an example of the above: For a line with these fixed values *up_num_months_voice* =2 and *up_num_months_memory_voice=3,* only with recommendations for voice:

Table 2

| | |
|---|---|
| January | Upgrade Voice Alert |
| February | Upgrade Voice Alert |
| March | Upgrade Voice Alert |
| April | Downgrade Voice Alert |
| | NOT recommended |
| January | Downgrade Voice Alert |
| February | Upgrade Voice Alert |
| March | Upgrade Voice Alert |
| April | Upgrade Voice Alert |
| | Upgrade recommended |
| January | Upgrade Voice Alert |

(continued)

| | |
|---|---|
| February | Upgrade Voice Alert |
| March | Downgrade Voice Alert |
| April | Upgrade Voice Alert |
| | Upgrade recommended |

4.4 Then, both for the upgrade and for the downgrade, the recommender system 100 maintains as a reference the maximum values of data/voice consumption (even if each one belonged to different billing cycles) and the last *tariff_id* for that line. Therefore, it has a record per line susceptible to receiving recommendations. With that, the recommended tariff will be the one closest to the highest consumption, thus ensuring that will not be exceeded with the historic usage pattern of that line.

4.4.1 Particularly, with the parameter *data_over_voice* of ob_config, if it is True, data recommendations will always be prioritised over voice recommendations. Thus, if a line is susceptible to receiving a downgrade recommendation for data but an upgrade recommendation for voice, the recommendation for data will be received. Similarly, if there is an upgrade for data and downgrade for voice; the upgrade for data would be prioritised. If the parameter is False, the reasoning is inverted.

4.5 With the lines and tariffs obtained after the preceding steps, the following step consists of, for each line, finding the possible tariffs to be recommended and calculating the Euclidean distance of each tuple (*tariff_data_bundled, tariff_voice_bundled*) from those tariffs to the unique one (data_consumption, voice_consumption) for the use of the line (obtained in step 4.4).

4.5.1 For each line, the recommender system 100 only considers as candidates for the recommendation those tariffs of the same subgroup (*subgroup* field in inventory_tariffs). These are the subgroups of tariffs considered.

4.5.2 The upgrade/downgrade values for all the available tariffs are also calculated, and those that, if chosen, would immediately generate alerts are discarded.

Example: For a line with *data_consumption* = 800, with *threshold_up* = 0.8, *threshold_down* = 0.3 reference values, a tariff with *tariff_voice_bundled* = 1000 could be recommended as 800 > 0.3*1000 and 800 < 0.8*1000.

4.5.3 If it is an upgrade (voice and/or data), for a line, only those with a higher franchise than the variable(s) that have generated the alert(s) will be analysed as potential tariffs. Ditto for a downgrade, keeping those with lower franchises.

4.5.4 If the tariff of a line has FR in voice or no voice franchise, only the data variable (bytes) will be considered for the recommendations. Therefore, the Euclidean distance is calculated using only that column.

*4.5.5* If the tariff of a line has PPU in voice, only for purposes of possible upgrades, the tariff franchise of the tariff for that line is considered to be the value of *ppu_threshold_up_voice.* It will receive recommendations for any tariff that complies with the aforementioned criteria. Ditto, conversely, for *ppu_threshold_down_voice.* If one of those fields is -1, no recommendation is made in that sense (upgrade/downgrade) for voice to a line having a tariff with ppu in voice.

4.5.6 Preferably, tariffs without FR data franchises, without data franchise or with PPU in data are not contemplated.

4.5.7 For the generic scenario (voice and data franchises), the Euclidean distance is calculated for each data and voice tuple. To calculate the Euclidean distance, first, the data and voice values for consumption and franchises must be on the same scale. A normalisation (MinMax) is applied to express all the values in the same range (0, 1).

4.5.8 The Euclidean distance for each of the tariffs obtained in the preceding steps is calculated with it. The tariff closest (minimum distance) to maximum consumption for that line is returned for each line susceptible to receiving recommendations.

5. The results are expressed with a table with the new tariff recommended for each line, also indicating if the recommendation is upgrade/downgrade (a field called *type_rec* with *up* or *down* values), and if it was based on excess data, voice or both (a field called *based_on* with *data, voice* or *both* values).

Figure 1 shows the diagram of the high-level recommendation process. In the diagram, it can be seen how the system receives as inputs the information referring to the lines (which would first correspond to the df_billing_cycle_input table, and then to df input), together with the information referring to the catalogue of tariffs (inventory_tariffs). The OB configuration with ob_config is added to this. These data entries are then used by the recommender system 100 to generate the recommendations.

4. Predictive model of voice and data consumption

The recommendations generated by the recommender system 100 have the possibility of being enriched using machine learning models for prediction. These models will predict the total (voice and data) consumption of each line for its next billing cycle, such that the recommendations would only be applied for those cases in which there are no alerts for recommendations in that future cycle. Thus, for all purposes, the predictions will generate a new billing cycle that will be added to those already existing ones and which would be considered as the "additional last billing cycle" in order to verify the consecutive and non-consecutive alerts during the cycle periods defined by each OB.

As already discussed, the results of the predictions will be stored in the *voice_consumption_predicted* and *data_consumption_predicted* fields of the df billing cycle_input table for each of the lines existing. The use of this prediction model is optional (it may not be used if decided on at the business level or if there is not enough historical data of the OB to have a good prediction model). In these cases, the value that will have these variables will be -1, and then billing cycles only up to the last existing real cycle will be considered.

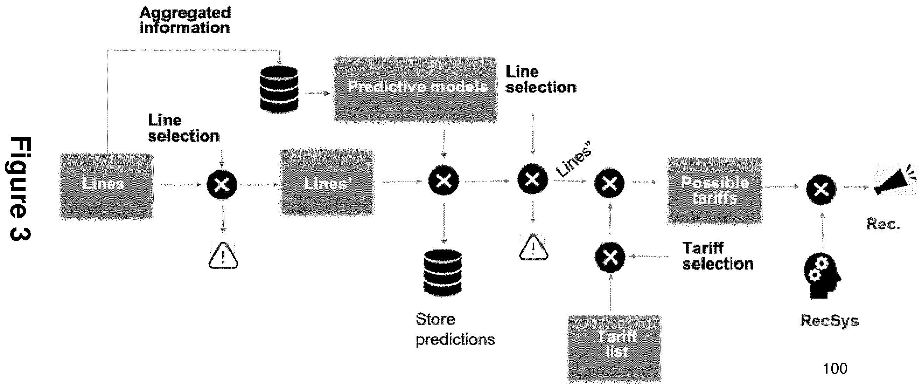

By way of illustration, the next diagram appears in Figure 3. First, the lines are filtered to have only those that are susceptible to receiving recommendations (the lines resulting from point 4.3. of the algorithm of section 3.), referred to as *Lines'* in the diagram. The prediction model is applied on these lines to obtain the estimated consumption for the next billing cycle. This cycle is added only if it was an additional billing cycle and the rules of 4.3 are applied again (except that now the last cycle is the predicted cycle, not the historical one). This gives rise to a new subgroup of lines susceptible to receiving recommendations, *Lines"*, equal to or less than the original (*Lines'*). This is followed by the recommendation algorithm as described in section 3 (from point 4.4.).

One of the main reasons for performing the prediction only on *Lines'* (and not on *Lines*) is to optimise computational resources. Of all the lines of a client (which can be in the order of 10k lines), some of them will not comply with the OB requirements for recommendations, so it is not necessary to calculate in them the consumption for the next billing cycle. It will only be necessary for that subgroup initially susceptible to receiving recommendations.

Particularly, the learning model used is made up of two parts. Firstly, using a SARIMA model to obtain the trend, seasonality and stationarity. Secondly, using a machine learning model to capture the non-linearities that the previous model (SARIMA) could not capture.

To do this, it is based on the idea of [1], where reference is made to the use of a prediction model as an initial model, followed by another machine learning model (for example a *Random Forest* algorithm, or any other distributed gradient boosting algorithm) that tries to predict errors of the first model.

For the case of the prediction model of the recommender system 100, a solution based both on [1] and on the idea of [2] is used, where a general model is used, and models for predicting the error of specific data subsets are then used.

In a particular embodiment, the steps that will be followed are:

1. The reference of the data size in the history can be seen. 80% of the first dates will be used as training data (train), while the last 20% will be used as testing data (test) for the prediction model.

2. Clustering the daily consumption of each department and organisation to which the lines belong. This gives the daily voice and data history aggregated by department and organisation.

3. Building a SARIMA model for voice and another independent model for data for each of those organisations and departments. This SARIMA model will predict the mean consumption per voice and data line of those organisations-departments.

4. Obtaining a table with the data per line (with the subgroup of lines *Lines'*). This table will provide the daily information on consumption of each of those lines, together with information on the contracted tariff franchise. Thus, the fields will be (this table will be referred to as df_input_forecast):

- phone_id: Id of the line
- date_tx: date
- billing_cycle_id: id of the billing cycle associated with the date
- voice_consumption: daily voice aggregation (min)
- data_consumption: daily data aggregation (Mb)
- tariff_data_bundle: value of the data franchise which that line has on that day
- tariff_voice_bundle: value of the voice franchise which that line has on that day

5. The data in the table is standardised to be expressed in similar magnitudes.

6. With df_input_forecast (except for the *voice_consumption* and *data_consumption* fields) a learning model is built using the LightGBM algorithm as a distributed gradient boosting algorithm for each line (one for voice and another one for data), where the error for each output variable is predicted.

- This error corresponds to the residual error of subtracting and_real - and_pred
- and_real is the real voice or data consumption
- and_pred is the prediction of the mean consumption per line of the SARIMA associated with the department-organisation to which each line belongs.
- Therefore, there is a LightGBM model trained for each line susceptible to receiving recommendations.

7. Thus, to predict the daily consumption per line of 20% of the test data to evaluate the model:

- First the daily consumption predicted for that 20% of days with the SARIMA model is obtained. Thus, the mean consumption predicted per organisation-department is provided.
- That consumption is corrected at the line level with the predicts made on that 20% of days with the LightGBM model corresponding to each line.
- Different metrics, such as *Mean Average Precision,* are calculated to assess the results and see if they are satisfactory.

8. After this, the predictions for that new billing cycle are obtained.

- First is obtained the daily consumption predicted for the next N days with the SARIMA model (N days in that next cycle, after the last date in the test data). Thus, the mean consumption predicted per organisation-department is provided.
- That consumption is corrected at the line level with the predicts made on those N days with the LightGBM model corresponding to each line.

9. Those consumptions predicted per day are added together to have all the estimated consumption of the next cycle for each line.

5. Clustering alternative for selecting tariffs

In section 4.5 of the algorithm in section 3, for the case of upgrading, the tariff immediately above the user's current tariff is established as a selection criterion from among those which, if chosen, will not generate alerts. Ditto for downgrading with the tariffs lower than the current tariff and which would not generate alerts: the immediately lower tariff from that list is selected.

However, on many occasions it may be better to recommend upgrades/downgrades not to the immediately higher/lower tariff, but rather to a tariff of those subgroups known to be working well (not generating alerts) for users having a line usage behaviour similar to that user for whom the recommendations are being made.

To obtain the clusters, in one embodiment an input data matrix per line is first used to model the use of said line, in order to find similar usage patterns between them. For example, two lines associated with a commercial department with similar usage. The following (df_input_clustering) are used as input data. This table will have the mean value per line of different variables related to the use of the mobile device over different natural months.

- phone_id: Line
- national_voice: National voice (min)
- international_voice: International voice (min)
- roaming_out_voice: Output voice roaming (min)
- national_data: National data (Mb)
- roaming_data: Data roaming (Mb)

With those variables in Mb and minutes, the GMM (Gaussian Mixture Model) clustering algorithm is applied to cluster each line into a specific cluster. The specific steps followed are:

4. Obtaining the df input_clustering matrix
5. Detecting and eliminating anomalies in the df_input_clustering table

    1. Selecting the already standardised df_input_clustering table
    2. Standardising the columns of the variables
    3. Applying the OSCVM (One-Class Support Vector Machine) algorithm for detecting outliers within that data set. The variables of the algorithm are the same 5 variables as those used later in the clustering. A grey search to find the OCSVM hyperparameters is not performed. Default hyperparameters are used: *{'nu': 1/(30 * len*

*(characteristics)), 'kernel': 'rbf', 'gamma': 1/(30 \* len (characteristics))}*

4. After applying the OCSVM algorithm, there are two outputs: First, a binary value indicating the lines which are outliers. Secondly, the value of the distance to the decision function for each of the lines.

5. Step 4 produces a table referred to as df_anomalies, with a *dist* column indicating the distance to the decision function (which can have a sign, being negative for outliers and positive for inliers), and another column called *anomalies* indicating whether or not there is an anomalous value (-1 for anomalous values).

6. On df_anomalies, the box-plot algorithm is applied on the distances (*dist*) to select as anomalies only those anomalous lines that are truly far from the decision boundary (instead of all of them).

7. At this point, there is a table with an anomaly_filter column that has a binary indicator to know which rows are outliers. Those rows are the ones to be removed from the dataset for clustering. However, even if the lines are not in the cluster, it should be indicated that these lines have been discarded. Instead of a cluster number, these lines are indicated with a predetermined number (e.g. -1).

8. The lines identified with that cluster of -1 are not susceptible to receiving the alternative tariff recommendations seen in this section 5. These lines will receive the default algorithm recommendations described in section 3.

6. Normalising the data of said matrix to have all the variables in the same magnitudes.

7. Obtaining the optimal number of clusters (K) for the GMM algorithm as a clustering algorithm using the maximum likelihood method by calculating for a different number of clusters the associated BIC (Bayesian Information Criterion). The number that gives the lowest BIC is chosen.

8. The algorithm is trained with those K clusters and the cluster associated with each line is predicted.

9. As part of the present invention, the generated clusters are visualised using a spider graph.

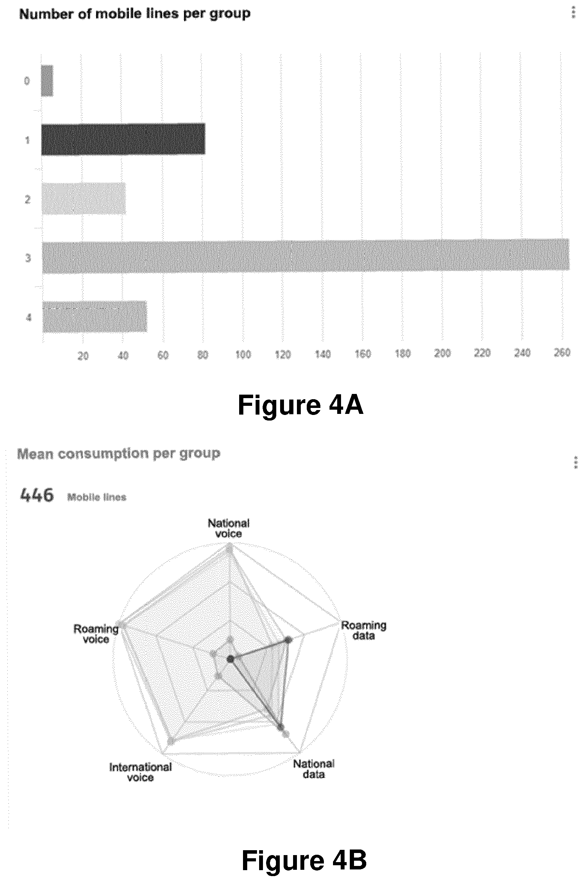

Figures 4A and 4B show an example of visualisation of the clustering of the telephone lines.

The next step is to find out how well the tariffs of the lines within the cluster work. Assuming that the last tariff they have is the same during the number of billing cycles *max(up_num_months_voice, down_num_months_voice, up_num_months_data, down_num_months_data)*, it can be seen, for the lines without alerts, how well the tariffs they have work. To do so, a utility function is calculated for each of these lines (users), which will be based on the calculation of reference limits obtained as a function of the tariff franchise. It is assumed that the line that makes the best use of its tariff is the one that is most equidistant from the alert limits.

$$lim_{inf}F_{v\prime} = \frac{down\_per\_fr\_voice\_a1}{100} \times F_v(U_i)$$

$$lim_{sup}F_{v\prime} = \frac{up\_per\_fr\_voice\_a1}{100} \times F_v(U_i)$$

$$F_{util\,voice}(U_i) = \left| N_{v\_up} \times lim_{sup}F_{v\prime} - \sum_{n}^{N_{v\_up}} D_v(n)_v \right| + \left| \sum_{n}^{N_{v\_down}} D_v(n) - N_{v\_down} \times lim_{inf}F_{v\prime} \right|$$

$$lim_{inf}F_{d\prime} = \frac{down\_per\_fr\_data\_a1}{100} \times F_d(U_i)$$

$$lim_{sup}F_{d\prime} = \frac{up\_per\_fr\_data\_a1}{100} \times F_d(U_i)$$

$$F_{util\,data}(U_i) = \left| N_{d\_up} \times lim_{sup}F_{d\prime} - \sum_{n}^{N_{d\_up}} D_d(n)_v \right| + \left| \sum_{n}^{N_{d\_down}} D_d(n) - N_{d\_down} \times lim_{inf}F_{d\prime} \right|$$

$$F_{util}(U_i) = F_{util\,voice}(U_i) + F_{util\,data}(U_i)$$

With $U_i$ being the line among similar lines that have no alerts and have one of the possible tariffs to be recommended, $F_v(U_i)$ the voice franchise of the tariff associated with $U_i$, $F_d(U_i)$ the data franchise, $D_d(n)$ and $D_v(n)$ the data and voice consumptions, respectively, for the month n. $N_{v\_up}$ = *up_num_months_voice,* $N_{v\_down}$ = *down_num_months_voice,* $N_{d\_up}$ = *up_num_months_data* and $N_{d\_down}$ = *down_num_months_data.*

Therefore, it provides a value $F_{util\ data}(U_i)$ for the line (user) i with respect to its current tariff t. This utility function will increase as it is more equidistant from these limits obtained based on the franchise and OB specifications.

After obtaining a metric that shows how well the current tariffs work for lines that do not have alerts, it is possible to recommend the best tariffs for lines that are susceptible to receiving recommendations.

$F_{util}$ (obtained in the previous point) would be equal to the rating that a user u' (line) gives to a specific tariff t (following the usual diagram of recommender systems 100 where there are users-items-ratings)

$$F_{util}(u',t) = r_{u',t}.$$

Therefore, the *rating* inferred for the user u of the tariff *t* would be: $r_{u,t} = k \times \Sigma_{u' \in C}(sim(u,u') \times r_{u',t})$

The term k is a normalisation factor: $1/\Sigma_{u' \in C}|sim(u,u')|$

A recommendation algorithm based on a user-user type collaborative filtering is thereby proposed.

By adding up the ratings of the different users u' of the cluster C for the tariff t, weighting them based on the similarity towards the user *u.* A user u' will only give a *rating* to the tariff(s) that has (or has had) in the history considered. If a *u'* has not had one of the tariffs t in particular, the *rating* it would give would be set to 0, thus not affecting the term of normalisation or the coefficient. This would be similar to choosing in C only the users u' who have had that tariff t (and those who have had it without generating alerts).

There are several similarity function possibilities sim(u,u'): cosine, Euclidean distance, ICM, etc. This function measures the similarity between the user u (to be recommended) and the user u' of the same cluster. The same rows per user (line) of the clustering input matrix, df_input_clustering, are used as vectors. In this case, the Euclidean distance is used.

This gives a set of estimated ratings for the line/user u with respect to the subgroup of tariffs susceptible to being recommended. Among all of them, the one with the highest score will be recommended.

6. Visualisation of the recommendations

The recommendations generated for each user are updated with each billing cycle, showing which lines receive upgrade/downgrade recommendations and for which tariff the change is recommended.

The information on the recommendations of the previous visualisation interface can be additionally reinforced by periodically sending mails.

In reference to the prediction models used, the proposal included in this invention is not the only one possible. There are machine learning models that allow the joint modelling of both the temporary components and the non-linearities, as is the case of recurrent neural networks. Furthermore, even in the case of working with *ensemble* models such as the LightGBM used herein, it is possible to model the temporary components by means of the use of additional variables known as *lags,* which represent the value of the output variable in the states prior to a specific temporal event t.

With respect to the clustering models, the advantage of the GMM algorithm is that having empty clusters is avoided. Even still, there are other possible algorithm alternatives, as is the case of K-Means ++, Latent Dirichlet Allocation (LDA) or even hierarchical clustering (when the line size of the client is not too high).

Lastly, once the *user-item-rating* relationship or, in the case of this invention, *line-tariff-utility function,* is given, different recommendation algorithms can be used to infer the rating of the lines to which a change is to be recommended from the subset of possible tariffs to be recommended. Among these algorithms are, for example, Matrix Factorisation or *Restricted Boltzmann Machines,* all of them algorithms for user-user collaborative filtering.

The present invention allows tariff change recommendations to be obtained for each line automatically. The recommender system is transparent with clients, showing both the lines for which an upgrade is recommended and the lines for which a downgrade is recommended. Likewise, it allows combining both the use of machine learning algorithms (GMM, LightGBM, SARIMA) together with business rules that must be taken into account for the recommendations and which are specified by the OB.

The definition of business rules by the OB is provided by means of a simple interface, which translates the specifications into said rules. The recommendations include both knowledge of the history of the lines (how tariffs thereof have been used up until now) and future knowledge, such that said recommendations are adjusted based on the forecast of the future use of the tariffs. The recommendations are reinforced with a segmentation of the lines based on their behaviour; the tariffs that are already working well in other similar of the client are weighted. In addition, as a derived value, this visualisation of the clusters is provided to the client. These recommendations are displayed to the customer through a simple and dynamic interface, and communication is reinforced by sending periodic mails with a summary of the recommendations.

The proposed invention can be implemented in hardware, software, firmware or any combination thereof. If it is implemented in software, the functions can be stored in or coded as one or more instructions or code in a computer-readable medium.

Computer-readable medium includes computer storage medium. The storage medium may be any available medium that can be accessed by a computer. By way of example, and not limitation, such computer-readable medium may comprise RAM, ROM, EEPROM, CD-ROM or other optical disk storage, magnetic or solid-state disk storage, or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disc and Blu-ray disc where disks typically reproduce data magnetically, while discs reproduce data optically with lasers. Combinations of the above should also be included within the scope of computer-readable media. Any processor and the storage medium may reside in an ASIC. The ASIC may reside in a user terminal. Alternatively, the processor and storage medium may reside as discrete components in a user terminal.

As used herein, computer program products comprising computer-readable media include all forms of computer-readable media except to the extent that such media are deemed not to be non-established transient propagating signals.

The scope of the present invention is defined in the attached claims.

**Claims**

1. A computer-implemented method for the optimisation of a user's telephone lines, comprising:

   a processing unit collecting, during a specific period of time, communications data related to each of the telephone lines of a group of users, and storing the collected data in a memory or database,

   wherein each user of the group of users comprises a plurality of lines, and
   wherein the communications data include voice and data traffic; and

   optimising the lines of a particular user using one or more artificial intelligence algorithms that process(es) the stored communications data associated with said particular user by means of executing the following steps:

   - combining the communications data with specific information on the characteristics of the tariffs associated with each of the lines, providing a first franchise information as a result;
   - comparing the consumption of each of the lines by means of the aggregation of the first franchise information to a number of billing cycles;
   - providing the lines with a first or a second alert, depending on a result of said comparison;
   - recommending a change of tariff for the lines having the first alert; and
   - adjusting the recommendation based on a series of pre-set rules.

2. The method according to claim 1, wherein the algorithm/algorithms further comprise(s) predicting a future consumption model of the lines and adapting the recommendation adjusted based on the forecast future consumption model.

3. The method according to claim 2, wherein the prediction of the future consumption model is performed only for the lines having the first alert.

4. The method according to claim 2 or 3, wherein the prediction of the future consumption model is performed: obtaining a daily consumption predicted for the next N days using a seasonal autoregressive integrated moving average algorithm, and correcting said daily consumption obtained using a distributed gradient boosting algorithm.

5. The method according to claim 2 or 3, wherein the prediction of the future consumption model is performed using a recurrent neural network.

6. The method according to any one of the preceding claims, wherein the recommendation of the change of tariff comprises a recommendation of a tariff increase or decrease.

7. The method according to any one of the preceding claims, wherein the provision of the first alert or of the second alert is performed by taking into consideration a billing time interval of the lines.

8. The method according to claim 6 or 7, further comprising executing a clustering algorithm which clusters together lines with a similar communications data pattern in one and the same cluster.

9. The method according to claim 8, wherein the clustering algorithm comprises at least one of: a Gaussian mixture modelling, GMM algorithm; a k-means algorithm; a latent Dirichlet allocation, LDA, algorithm; or a hierarchical clustering algorithm.

10. The method according to any one of the preceding claims, wherein said series of pre-set rules comprise one or more of: an indication of whether to prioritise data-over-voice recommendations, an indication of the number of consecutive or non-consecutive months necessary for a line to execute a recommendation, an indication of the franchise data and/or voice usage percentage that generates the first alert, an indication of the franchise data and/or voice usage percentage that generates the second alert, an indication of the franchise data usage percentage that generates a recommendation, an indication of the minutes after which recommendations are made when the franchise is a pay-per-use franchise.

11. A system for the optimisation of a user's telephone lines, comprising:

   a memory; and
   one or more processors, wherein the processor(s) are adapted and configured for optimising a user's telephone lines determining the use of one or more artificial intelligence algorithms that process(es) stored communications data associated with said particular user by means of executing the following steps:

      - combining the communications data with specific information on the characteristics of the tariffs associated with each of the lines, providing a first franchise information as a result;
      - comparing the consumption of each of the lines by means of the aggregation of the first franchise information to a number of billing cycles;
      - providing the lines with a first or a second alert, depending on a result of said comparison;
      - recommending a change of tariff for the lines having the first alert; and
      - adjusting the recommendation based on a series of pre-set rules.

12. A computer program product including code instructions which, when implemented in a computing system, implement a method according to any one of claims 1 to 10.

**Figure 1**

| | |
|---|---|
| Combining communication data with specification information on the characteristics of the tariffs associated with each the lines, providing a first franchise information as a result | 201 |
| Comparing the consumption of each line by means of the aggregation of the first franchise information to a number of billing cycles | 202 |
| Providing the lines with a first or a second alert, depending on a result of said comparison | 203 |
| Recommending a change of tariff for the lines having the first alert | 204 |
| Adjusting the recommendation based on a series of pre-set rules | 205 |

# Figure 2

**Figure 3**

**Number of mobile lines per group**

# Figure 4A

**Mean consumption per group**

446 Mobile lines

# Figure 4B

<div align="center">

**INTERNATIONAL SEARCH REPORT**

</div>

| | International application No. |
|---|---|
| | PCT/ES2021/070249 |

**A. CLASSIFICATION OF SUBJECT MATTER**

*G06Q30/02* (2012.01)

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

EPODOC, INVENES, WPI, INTERNET

**C. DOCUMENTS CONSIDERED TO BE RELEVANT**

| Category* | Citation of document, with indication, where appropriate, of the relevant passages | Relevant to claim No. |
|---|---|---|
| X | XIAO SHUOCHEN et al.. Study of matching model between tariff package and user behavior. Journal of China Universities of Posts and Telecommunications June 2017 Elsevier B.v. Netherlands., 31/05/2017, Vol. 24, N° 3, pages 91 - 96 [on line] [retrieved the 05/11/2021]. Retrieved from <URL: https://www.sciencedirect.com/science/article/abs/pii/S1005888517602164>, ISSN 1005-8885 (print), <DOI: 10.1016/S1005-8885(17)60216-4> Sections 3, 5. | 1-12 |
| X | US 2019311430 A1 (RALEIGH GREGORY G) 10/10/2019, paragraph [68]; paragraph [71]; paragraphs[246 - 247]; paragraph [258]; paragraph [278]; paragraph [516]; paragraphs [617 - 638]; figure 16, | 1-12 |

☐ Further documents are listed in the continuation of Box C.          ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance. | |
| "E" | earlier document but published on or after the international filing date | |
| "L" | document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" | document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" | document published prior to the international filing date but later than the priority date claimed | |
| | | "&" document member of the same patent family |

| Date of the actual completion of the international search | Date of mailing of the international search report |
|---|---|
| 26/11/2021 | **(29/11/2021)** |

| Name and mailing address of the ISA/ | Authorized officer |
|---|---|
| OFICINA ESPAÑOLA DE PATENTES Y MARCAS<br>Paseo de la Castellana, 75 - 28071 Madrid (España)<br>Facsimile No.: 91 349 53 04 | J. Vazquez Burgos<br><br>Telephone No. 91 3495513 |

Form PCT/ISA/210 (second sheet) (January 2015)

## INTERNATIONAL SEARCH REPORT

Information on patent family members

| | | International application No. |
|---|---|---|
| | | PCT/ES2021/070249 |

| Patent document cited in the search report | Publication date | Patent family member(s) | Publication date |
|---|---|---|---|
| US2019311430 A1 | 10.10.2019 | US2021344718 A1 | 04.11.2021 |
| | | US2021297456 A1 | 23.09.2021 |
| | | US2021266791 A1 | 26.08.2021 |
| | | US2021211316 A1 | 08.07.2021 |
| | | US2021153007 A1 | 20.05.2021 |
| | | US2021152441 A1 | 20.05.2021 |
| | | US2021144546 A1 | 13.05.2021 |
| | | US2021120025 A1 | 22.04.2021 |
| | | US2021120128 A1 | 22.04.2021 |
| | | US2021120130 A1 | 22.04.2021 |
| | | US2021120436 A1 | 22.04.2021 |
| | | US2021120398 A1 | 22.04.2021 |
| | | US2021105145 A1 | 08.04.2021 |
| | | US2021103981 A1 | 08.04.2021 |
| | | US2021103983 A1 | 08.04.2021 |
| | | US2021067989 A1 | 04.03.2021 |
| | | US2021067359 A1 | 04.03.2021 |
| | | US2021029221 A1 | 28.01.2021 |
| | | EP3800860 A1 | 07.04.2021 |
| | | US2020322802 A1 | 08.10.2020 |
| | | US2020296776 A1 | 17.09.2020 |
| | | US2020107226 A1 | 02.04.2020 |
| | | US2020092707 A1 | 19.03.2020 |
| | | EP3691309 A1 | 05.08.2020 |
| | | US2020059496 A1 | 20.02.2020 |
| | | US2020059426 A1 | 20.02.2020 |
| | | US2020045571 A1 | 06.02.2020 |
| | | US2020045519 A1 | 06.02.2020 |
| | | EP3661242 A1 | 03.06.2020 |
| | | US2019327363 A1 | 24.10.2019 |
| | | US11039020 B2 | 15.06.2021 |
| | | US2019327624 A1 | 24.10.2019 |
| | | US10749700 B2 | 18.08.2020 |
| | | CA3055366 A1 | 05.08.2010 |
| | | US10783581 B2 | 22.09.2020 |
| | | US2019297501 A1 | 26.09.2019 |
| | | US2019280946 A1 | 12.09.2019 |
| | | US10855559 B2 | 01.12.2020 |
| | | US2019281463 A1 | 12.09.2019 |
| | | US11096055 B2 | 17.08.2021 |
| | | US2019281168 A1 | 12.09.2019 |
| | | US2019274056 A1 | 05.09.2019 |
| | | US10791471 B2 | 29.09.2020 |
| | | US2019274033 A1 | 05.09.2019 |
| | | US10834577 B2 | 10.11.2020 |
| | | US2019268758 A1 | 29.08.2019 |
| | | US10582375 B2 | 03.03.2020 |
| | | US2019261203 A1 | 22.08.2019 |
| | | US10779177 B2 | 15.09.2020 |
| | | US2019261160 A1 | 22.08.2019 |

Form PCT/ISA/210 (patent family annex) (January 2015)

## INTERNATIONAL SEARCH REPORT

Information on patent family members

| International application No. |
|---|
| PCT/ES2021/070249 |

| Patent document cited in the search report | Publication date | Patent family member(s) | Publication date |
|---|---|---|---|
| | | US10798558 B2 | 06.10.2020 |
| | | US2019261222 A1 | 22.08.2019 |
| | | US10841839 B2 | 17.11.2020 |
| | | US2019261437 A1 | 22.08.2019 |
| | | US10536983 B2 | 14.01.2020 |
| | | US2019260879 A1 | 22.08.2019 |
| | | US10798252 B2 | 06.10.2020 |
| | | US2019259097 A1 | 22.08.2019 |
| | | US10803518 B2 | 13.10.2020 |
| | | US2019141534 A1 | 09.05.2019 |
| | | US10694385 B2 | 23.06.2020 |
| | | US2019132739 A1 | 02.05.2019 |
| | | US10771980 B2 | 08.09.2020 |
| | | US2019132736 A1 | 02.05.2019 |
| | | US10716006 B2 | 14.07.2020 |
| | | US2019124209 A1 | 25.04.2019 |
| | | US10798254 B2 | 06.10.2020 |
| | | US2019124513 A1 | 25.04.2019 |
| | | US10869199 B2 | 15.12.2020 |
| | | US2019116516 A1 | 18.04.2019 |
| | | US10985977 B2 | 20.04.2021 |
| | | US2019058987 A1 | 21.02.2019 |
| | | US10484858 B2 | 19.11.2019 |
| | | US2019037049 A1 | 31.01.2019 |
| | | US10681179 B2 | 09.06.2020 |
| | | US2019028865 A1 | 24.01.2019 |
| | | US10462627 B2 | 29.10.2019 |
| | | EP3493505 A1 | 05.06.2019 |
| | | EP3493505 B1 | 28.10.2020 |
| | | US2018262947 A1 | 13.09.2018 |
| | | US10237773 B2 | 19.03.2019 |
| | | US2018227433 A1 | 09.08.2018 |
| | | US10320990 B2 | 11.06.2019 |
| | | US2018184324 A1 | 28.06.2018 |
| | | US10848330 B2 | 24.11.2020 |
| | | US2018167413 A1 | 14.06.2018 |
| | | US10326800 B2 | 18.06.2019 |
| | | US2017099604 A1 | 06.04.2017 |
| | | US9980146 B2 | 22.05.2018 |
| | | US2018097643 A1 | 05.04.2018 |
| | | US10715342 B2 | 14.07.2020 |
| | | ES2657435T T3 | 05.03.2018 |
| | | ES2655499T T3 | 20.02.2018 |
| | | EP3355597 A1 | 01.08.2018 |
| | | EP3355597 B1 | 11.11.2020 |
| | | US2017366680 A1 | 21.12.2017 |
| | | US10171681 B2 | 01.01.2019 |
| | | US2017366433 A1 | 21.12.2017 |
| | | US10326675 B2 | 18.06.2019 |

Form PCT/ISA/210 (patent family annex) (January 2015)

## INTERNATIONAL SEARCH REPORT

Information on patent family members

| International application No. |
|---|
| PCT/ES2021/070249 |

| Patent document cited in the search report | Publication date | Patent family member(s) | Publication date |
|---|---|---|---|
| | | CN107425988 A | 01.12.2017 |
| | | CN107425988B B | 07.08.2020 |
| | | US2017339553 A1 | 23.11.2017 |
| | | US10171988 B2 | 01.01.2019 |
| | | US2017332240 A1 | 16.11.2017 |
| | | US10321320 B2 | 11.06.2019 |
| | | CN107317834 A | 03.11.2017 |
| | | CN107317834B B | 02.11.2021 |
| | | US2017318125 A1 | 02.11.2017 |
| | | US10237146 B2 | 19.03.2019 |
| | | US2017310768 A1 | 26.10.2017 |
| | | US9866642 B2 | 09.01.2018 |
| | | US2017295258 A1 | 12.10.2017 |
| | | US9954975 B2 | 24.04.2018 |
| | | US2017279971 A1 | 28.09.2017 |
| | | US10264138 B2 | 16.04.2019 |
| | | US2012278722 A1 | 01.11.2012 |
| | | US9755842 B2 | 05.09.2017 |
| | | US2017223516 A1 | 03.08.2017 |
| | | US10064033 B2 | 28.08.2018 |
| | | US2017215073 A1 | 27.07.2017 |
| | | US10321318 B2 | 11.06.2019 |
| | | US2017206529 A1 | 20.07.2017 |
| | | US10248996 B2 | 02.04.2019 |
| | | US2017208459 A1 | 20.07.2017 |
| | | US10171990 B2 | 01.01.2019 |
| | | US2017201850 A1 | 13.07.2017 |
| | | US9955332 B2 | 24.04.2018 |
| | | US2017188232 A1 | 29.06.2017 |
| | | US10064055 B2 | 28.08.2018 |
| | | US2017187839 A1 | 29.06.2017 |
| | | US10080250 B2 | 18.09.2018 |
| | | US2017181027 A1 | 22.06.2017 |
| | | US10237757 B2 | 19.03.2019 |
| | | US2017149629 A1 | 25.05.2017 |
| | | US10057141 B2 | 21.08.2018 |
| | | US2017078922 A1 | 16.03.2017 |
| | | US10492102 B2 | 26.11.2019 |
| | | US2017078886 A1 | 16.03.2017 |
| | | US9973930 B2 | 15.05.2018 |
| | | US2016373588 A1 | 22.12.2016 |
| | | US10200541 B2 | 05.02.2019 |
| | | US2016359665 A1 | 08.12.2016 |
| | | US9641957 B2 | 02.05.2017 |
| | | US2016344604 A1 | 24.11.2016 |
| | | US9647918 B2 | 09.05.2017 |
| | | US2016337883 A1 | 17.11.2016 |
| | | US9674731 B2 | 06.06.2017 |
| | | US2016323771 A1 | 03.11.2016 |

Form PCT/ISA/210 (patent family annex) (January 2015)

## INTERNATIONAL SEARCH REPORT

Information on patent family members

| International application No. |
| --- |
| PCT/ES2021/070249 |

| Patent document cited in the search report | Publication date | Patent family member(s) | Publication date |
| --- | --- | --- | --- |
| | | US9942796 B2 | 10.04.2018 |
| | | US2016330567 A1 | 08.11.2016 |
| | | US9491564 B1 | 08.11.2016 |
| | | US2016323732 A1 | 03.11.2016 |
| | | US9986413 B2 | 29.05.2018 |
| | | US2016323734 A1 | 03.11.2016 |
| | | US10070305 B2 | 04.09.2018 |
| | | US2016323279 A1 | 03.11.2016 |
| | | US9615192 B2 | 04.04.2017 |
| | | EP3116246 A1 | 11.01.2017 |
| | | EP3116246 B1 | 30.08.2017 |
| | | EP3116250 A1 | 11.01.2017 |
| | | EP3116250 B1 | 15.11.2017 |
| | | EP3116245 A1 | 11.01.2017 |
| | | EP3116245 B1 | 01.11.2017 |
| | | US2016212174 A1 | 21.07.2016 |
| | | US10028144 B2 | 17.07.2018 |
| | | US2016210578 A1 | 21.07.2016 |
| | | US10165447 B2 | 25.12.2018 |
| | | US2016112821 A1 | 21.04.2016 |
| | | US9532161 B2 | 27.12.2016 |
| | | EP3046344 A1 | 20.07.2016 |
| | | EP3046344 B1 | 29.05.2019 |
| | | EP3043580 A1 | 13.07.2016 |
| | | EP3043580 B1 | 30.08.2017 |
| | | EP3043579 A1 | 13.07.2016 |
| | | US2016028770 A1 | 28.01.2016 |
| | | US9769207 B2 | 19.09.2017 |
| | | EP3043578 A1 | 13.07.2016 |
| | | EP3043578 B1 | 01.01.2020 |
| | | EP3062540 A1 | 31.08.2016 |
| | | EP3062540 B1 | 04.03.2020 |
| | | US9220027 B1 | 22.12.2015 |
| | | US2015230184 A1 | 13.08.2015 |
| | | US9198076 B2 | 24.11.2015 |
| | | US2015230152 A1 | 13.08.2015 |
| | | US9271184 B2 | 23.02.2016 |
| | | US2015230127 A1 | 13.08.2015 |
| | | US9521578 B2 | 13.12.2016 |
| | | US2015230126 A1 | 13.08.2015 |
| | | US9258735 B2 | 09.02.2016 |
| | | US2015223109 A1 | 06.08.2015 |
| | | US9319913 B2 | 19.04.2016 |
| | | US2015223103 A1 | 06.08.2015 |
| | | US9749899 B2 | 29.08.2017 |
| | | US2015223102 A1 | 06.08.2015 |
| | | US9749898 B2 | 29.08.2017 |
| | | US2015223101 A1 | 06.08.2015 |
| | | US9198075 B2 | 24.11.2015 |

## INTERNATIONAL SEARCH REPORT

Information on patent family members

| International application No. |
| --- |
| PCT/ES2021/070249 |

| Patent document cited in the search report | Publication date | Patent family member(s) | Publication date |
| --- | --- | --- | --- |
| | | US2015223100 A1 | 06.08.2015 |
| | | US9215613 B2 | 15.12.2015 |
| | | US2015223071 A1 | 06.08.2015 |
| | | US9277433 B2 | 01.03.2016 |
| | | US2015215946 A1 | 30.07.2015 |
| | | US9225797 B2 | 29.12.2015 |
| | | US2015215815 A1 | 30.07.2015 |
| | | US9198074 B2 | 24.11.2015 |
| | | US2015215814 A1 | 30.07.2015 |
| | | US9277445 B2 | 01.03.2016 |
| | | US2015215786 A1 | 30.07.2015 |
| | | US9204374 B2 | 01.12.2015 |
| | | US2015215431 A1 | 30.07.2015 |
| | | US9386121 B2 | 05.07.2016 |
| | | US2015215215 A1 | 30.07.2015 |
| | | US9154428 B2 | 06.10.2015 |
| | | US2015208273 A1 | 23.07.2015 |
| | | US9137701 B2 | 15.09.2015 |
| | | US2015207760 A1 | 23.07.2015 |
| | | US9179359 B2 | 03.11.2015 |
| | | US2015207708 A1 | 23.07.2015 |
| | | US9215159 B2 | 15.12.2015 |
| | | US2015207698 A1 | 23.07.2015 |
| | | US9544397 B2 | 10.01.2017 |
| | | US2015207686 A1 | 23.07.2015 |
| | | US9143976 B2 | 22.09.2015 |
| | | US2015201417 A1 | 16.07.2015 |
| | | US9565707 B2 | 07.02.2017 |
| | | US2015201333 A1 | 16.07.2015 |
| | | US9173104 B2 | 27.10.2015 |
| | | US2015201331 A1 | 16.07.2015 |
| | | US9232403 B2 | 05.01.2016 |
| | | US2015201089 A1 | 16.07.2015 |
| | | US9706061 B2 | 11.07.2017 |
| | | US2015200882 A1 | 16.07.2015 |
| | | US9198117 B2 | 24.11.2015 |
| | | US2015195714 A1 | 09.07.2015 |
| | | US9179316 B2 | 03.11.2015 |
| | | US2015195414 A1 | 09.07.2015 |
| | | US9179315 B2 | 03.11.2015 |
| | | US2015181415 A1 | 25.06.2015 |
| | | US9572019 B2 | 14.02.2017 |
| | | US2015163694 A1 | 11.06.2015 |
| | | US9609459 B2 | 28.03.2017 |
| | | US2015143456 A1 | 21.05.2015 |
| | | US9392462 B2 | 12.07.2016 |
| | | US2015111528 A1 | 23.04.2015 |
| | | US9591474 B2 | 07.03.2017 |
| | | US2015072642 A1 | 12.03.2015 |

Form PCT/ISA/210 (patent family annex) (January 2015)

## INTERNATIONAL SEARCH REPORT

Information on patent family members

| International application No. |
| --- |
| PCT/ES2021/070249 |

| Patent document cited in the search report | Publication date | Patent family member(s) | Publication date |
| --- | --- | --- | --- |
| | | US9819808 B2 | 14.11.2017 |
| | | US2015072641 A1 | 12.03.2015 |
| | | US9386165 B2 | 05.07.2016 |
| | | US2015026761 A1 | 22.01.2015 |
| | | US9491199 B2 | 08.11.2016 |
| | | US2014337520 A1 | 13.11.2014 |
| | | US9705771 B2 | 11.07.2017 |
| | | US2014337519 A1 | 13.11.2014 |
| | | US9094311 B2 | 28.07.2015 |
| | | US2014289794 A1 | 25.09.2014 |
| | | US2014273965 A1 | 18.09.2014 |
| | | US9609510 B2 | 28.03.2017 |
| | | US2014248852 A1 | 04.09.2014 |
| | | US9578182 B2 | 21.02.2017 |
| | | US2014235230 A1 | 21.08.2014 |
| | | US9037127 B2 | 19.05.2015 |
| | | US2014226496 A1 | 14.08.2014 |
| | | US8948025 B2 | 03.02.2015 |
| | | US2014198687 A1 | 17.07.2014 |
| | | US2014162595 A1 | 12.06.2014 |
| | | US9571559 B2 | 14.02.2017 |
| | | US2014148123 A1 | 29.05.2014 |
| | | US9026079 B2 | 05.05.2015 |
| | | US2014140213 A1 | 22.05.2014 |
| | | US9270559 B2 | 23.02.2016 |
| | | US2014133297 A1 | 15.05.2014 |
| | | US9532261 B2 | 27.12.2016 |
| | | NZ594791 A | 28.02.2014 |
| | | NZ594766 A | 28.02.2014 |
| | | NZ594758 A | 28.02.2014 |
| | | NZ594724 A | 28.02.2014 |
| | | US2014128026 A1 | 08.05.2014 |
| | | US8788661 B2 | 22.07.2014 |
| | | US2014128025 A1 | 08.05.2014 |
| | | NZ594764 A | 31.01.2014 |
| | | NZ594762 A | 31.01.2014 |
| | | NZ594756 A | 31.01.2014 |
| | | NZ594761 A | 28.03.2014 |
| | | NZ594734 A | 28.03.2014 |
| | | NZ594731 A | 28.03.2014 |
| | | US2014113583 A1 | 24.04.2014 |
| | | US8886162 B2 | 11.11.2014 |
| | | US2014098671 A1 | 10.04.2014 |
| | | US9351193 B2 | 24.05.2016 |
| | | US2014095706 A1 | 03.04.2014 |
| | | US9609544 B2 | 28.03.2017 |
| | | US2014094159 A1 | 03.04.2014 |
| | | US9253663 B2 | 02.02.2016 |
| | | US2014075567 A1 | 13.03.2014 |

Form PCT/ISA/210 (patent family annex) (January 2015)

## INTERNATIONAL SEARCH REPORT

Information on patent family members

International application No.

PCT/ES2021/070249

| Patent document cited in the search report | Publication date | Patent family member(s) | Publication date |
|---|---|---|---|
| | | WO2014127322 A1 | 21.08.2014 |
| | | US2014040975 A1 | 06.02.2014 |
| | | US10057775 B2 | 21.08.2018 |
| | | US2014024340 A1 | 23.01.2014 |
| | | US9565543 B2 | 07.02.2017 |
| | | NZ594715 A | 20.12.2013 |
| | | US2013304616 A1 | 14.11.2013 |
| | | US9858559 B2 | 02.01.2018 |
| | | US2013305322 A1 | 14.11.2013 |
| | | US8745220 B2 | 03.06.2014 |
| | | NZ594803 A | 25.10.2013 |
| | | NZ594798 A | 27.09.2013 |
| | | NZ594804 A | 27.09.2013 |
| | | NZ594800 A | 27.09.2013 |
| | | NZ594799 A | 27.09.2013 |
| | | NZ594796 A | 27.09.2013 |
| | | NZ594795 A | 27.09.2013 |
| | | NZ594793 A | 27.09.2013 |
| | | NZ594789 A | 27.09.2013 |
| | | NZ594787 A | 27.09.2013 |
| | | NZ594753 A | 27.09.2013 |
| | | NZ594725 A | 27.09.2013 |
| | | US2013250768 A1 | 26.09.2013 |
| | | US8797908 B2 | 05.08.2014 |
| | | NZ594801 A | 30.08.2013 |
| | | NZ594788 A | 30.08.2013 |
| | | NZ594732 A | 30.08.2013 |
| | | US2013239194 A1 | 12.09.2013 |
| | | US8695073 B2 | 08.04.2014 |
| | | US2013235766 A1 | 12.09.2013 |
| | | US8570908 B2 | 29.10.2013 |
| | | US2013231084 A1 | 05.09.2013 |
| | | US8737957 B2 | 27.05.2014 |
| | | US2013229951 A1 | 05.09.2013 |
| | | US2013227659 A1 | 29.08.2013 |
| | | US8635678 B2 | 21.01.2014 |
| | | US2013215795 A1 | 22.08.2013 |
| | | US8724554 B2 | 13.05.2014 |
| | | WO2014018425 A2 | 30.01.2014 |
| | | WO2014018425 A3 | 15.05.2014 |
| | | US2013196647 A1 | 01.08.2013 |
| | | US2013145422 A1 | 06.06.2013 |
| | | US9198042 B2 | 24.11.2015 |
| | | US2013133028 A1 | 23.05.2013 |
| | | US8640198 B2 | 28.01.2014 |
| | | US2013132854 A1 | 23.05.2013 |
| | | US9557889 B2 | 31.01.2017 |
| | | US2013132578 A1 | 23.05.2013 |
| | | US8639811 B2 | 28.01.2014 |

Form PCT/ISA/210 (patent family annex) (January 2015)

**INTERNATIONAL SEARCH REPORT**

Information on patent family members

| International application No. |
|---|
| PCT/ES2021/070249 |

| Patent document cited in the search report | Publication date | Patent family member(s) | Publication date |
|---|---|---|---|
| | | US2013125219 A1 | 16.05.2013 |
| | | US8639935 B2 | 28.01.2014 |
| | | US2013109378 A1 | 02.05.2013 |
| | | US9204282 B2 | 01.12.2015 |
| | | US2013107706 A1 | 02.05.2013 |
| | | US9247450 B2 | 26.01.2016 |
| | | US2013102278 A1 | 25.04.2013 |
| | | US8630630 B2 | 14.01.2014 |
| | | US2013096998 A1 | 18.04.2013 |
| | | US8667571 B2 | 04.03.2014 |
| | | US2013080607 A1 | 28.03.2013 |
| | | US8631102 B2 | 14.01.2014 |
| | | US2013072149 A1 | 21.03.2013 |
| | | US8630611 B2 | 14.01.2014 |
| | | US2013065578 A1 | 14.03.2013 |
| | | US8634821 B2 | 21.01.2014 |
| | | US2013065553 A1 | 14.03.2013 |
| | | US8630617 B2 | 14.01.2014 |
| | | US2013065551 A1 | 14.03.2013 |
| | | US8626115 B2 | 07.01.2014 |
| | | US2013045710 A1 | 21.02.2013 |
| | | US8897744 B2 | 25.11.2014 |
| | | US2013040703 A1 | 14.02.2013 |
| | | US8903452 B2 | 02.12.2014 |
| | | US2013006780 A1 | 03.01.2013 |
| | | US8898079 B2 | 25.11.2014 |
| | | US2013006729 A1 | 03.01.2013 |
| | | US8924549 B2 | 30.12.2014 |
| | | US2013005322 A1 | 03.01.2013 |
| | | US8688099 B2 | 01.04.2014 |
| | | US2013005299 A1 | 03.01.2013 |
| | | US8666364 B2 | 04.03.2014 |
| | | US2013003613 A1 | 03.01.2013 |
| | | US8588110 B2 | 19.11.2013 |
| | | US2012330829 A1 | 27.12.2012 |
| | | US8634805 B2 | 21.01.2014 |
| | | US2012317284 A1 | 13.12.2012 |
| | | US8527630 B2 | 03.09.2013 |
| | | US2012310804 A1 | 06.12.2012 |
| | | US8868455 B2 | 21.10.2014 |
| | | US8326958 B1 | 04.12.2012 |
| | | US2012294195 A1 | 22.11.2012 |
| | | US8441989 B2 | 14.05.2013 |
| | | CA2787066 A1 | 05.08.2010 |
| | | CA2787061 A1 | 05.08.2010 |
| | | CA2787061 C | 24.09.2019 |
| | | CA2786899 A1 | 05.08.2010 |
| | | CA2786899 C | 21.03.2017 |
| | | CA2786894 A1 | 05.08.2010 |

Form PCT/ISA/210 (patent family annex) (January 2015)

## INTERNATIONAL SEARCH REPORT

Information on patent family members

International application No.

PCT/ES2021/070249

| Patent document cited in the search report | Publication date | Patent family member(s) | Publication date |
|---|---|---|---|
| | | CA2786894 C | 10.01.2017 |
| | | CA2786893 A1 | 05.08.2010 |
| | | CA2786892 A1 | 05.08.2010 |
| | | CA2786892 C | 16.05.2017 |
| | | CA2786887 A1 | 05.08.2010 |
| | | CA2786886 A1 | 05.08.2010 |
| | | CA2786884 A1 | 05.08.2010 |
| | | CA2786881 A1 | 05.08.2010 |
| | | CA2786881 C | 19.06.2018 |
| | | CA2786878 A1 | 05.08.2010 |
| | | CA2786876 A1 | 05.08.2010 |
| | | CA2786875 A1 | 05.08.2010 |
| | | CA2786873 A1 | 05.08.2010 |
| | | CA2786873 C | 15.10.2019 |
| | | CA2786870 A1 | 05.08.2010 |
| | | CA2786870 C | 09.05.2017 |
| | | CA2786868 A1 | 05.08.2010 |
| | | CA2786868 C | 08.08.2017 |
| | | CA2786865 A1 | 05.08.2010 |
| | | CA2786865 C | 07.03.2017 |
| | | CA2786864 A1 | 05.08.2010 |
| | | CA2786864 C | 19.06.2018 |
| | | CA2786832 A1 | 05.08.2010 |
| | | CA2786832 C | 20.06.2017 |
| | | CA2786830 A1 | 05.08.2010 |
| | | CA2786828 A1 | 05.08.2010 |
| | | CA2786825 A1 | 05.08.2010 |
| | | CA2786815 A1 | 05.08.2010 |
| | | CA2786752 A1 | 05.08.2010 |
| | | CA2786749 A1 | 05.08.2010 |
| | | CA2786746 A1 | 05.08.2010 |
| | | CA2786746 C | 30.05.2017 |
| | | US2012221955 A1 | 30.08.2012 |
| | | US8893009 B2 | 18.11.2014 |
| | | US2012215911 A1 | 23.08.2012 |
| | | US8606911 B2 | 10.12.2013 |
| | | US2012214441 A1 | 23.08.2012 |
| | | US8406733 B2 | 26.03.2013 |
| | | US2012210391 A1 | 16.08.2012 |
| | | US8396458 B2 | 12.03.2013 |
| | | US2012209750 A1 | 16.08.2012 |
| | | US8385916 B2 | 26.02.2013 |
| | | US2012208496 A1 | 16.08.2012 |
| | | US8478667 B2 | 02.07.2013 |
| | | US2012203677 A1 | 09.08.2012 |
| | | US9179308 B2 | 03.11.2015 |
| | | US2012201133 A1 | 09.08.2012 |
| | | US2012197792 A1 | 02.08.2012 |
| | | US8713630 B2 | 29.04.2014 |

Form PCT/ISA/210 (patent family annex) (January 2015)

## INTERNATIONAL SEARCH REPORT

Information on patent family members

| International application No. |
| --- |
| PCT/ES2021/070249 |

| Patent document cited in the search report | Publication date | Patent family member(s) | Publication date |
| --- | --- | --- | --- |
| | | US2012196565 A1 | 02.08.2012 |
| | | US8531986 B2 | 10.09.2013 |
| | | US2012195223 A1 | 02.08.2012 |
| | | US8547872 B2 | 01.10.2013 |
| | | US2012195222 A1 | 02.08.2012 |
| | | US8467312 B2 | 18.06.2013 |
| | | US2012195206 A1 | 02.08.2012 |
| | | US8437271 B2 | 07.05.2013 |
| | | US2012192249 A1 | 26.07.2012 |
| | | US8516552 B2 | 20.08.2013 |
| | | US2012167162 A1 | 28.06.2012 |
| | | US8793758 B2 | 29.07.2014 |
| | | US2012134291 A1 | 31.05.2012 |
| | | US9014026 B2 | 21.04.2015 |
| | | CN102483730 A | 30.05.2012 |
| | | CN102483730B B | 11.05.2016 |
| | | US2012101952 A1 | 26.04.2012 |
| | | US8745191 B2 | 03.06.2014 |
| | | US2012096513 A1 | 19.04.2012 |
| | | US2014059640 A9 | 27.02.2014 |
| | | US2012089845 A1 | 12.04.2012 |
| | | US8351898 B2 | 08.01.2013 |
| | | US2012089727 A1 | 12.04.2012 |
| | | US8924543 B2 | 30.12.2014 |
| | | US2012088470 A1 | 12.04.2012 |
| | | US8897743 B2 | 25.11.2014 |
| | | US2012087319 A1 | 12.04.2012 |
| | | US8898293 B2 | 25.11.2014 |
| | | US2012084438 A1 | 05.04.2012 |
| | | US8725123 B2 | 13.05.2014 |
| | | US2012084184 A1 | 05.04.2012 |
| | | US8924469 B2 | 30.12.2014 |
| | | US2012075249 A1 | 29.03.2012 |
| | | US8902191 B2 | 02.12.2014 |
| | | CN102365890 A | 29.02.2012 |
| | | CN102365890B B | 18.06.2014 |
| | | CN102365878 A | 29.02.2012 |
| | | CN102365878B B | 22.02.2017 |
| | | CN102365877 A | 29.02.2012 |
| | | CN102365876 A | 29.02.2012 |
| | | CN102365876B B | 04.03.2015 |
| | | CN102365858 A | 29.02.2012 |
| | | CN102365858B B | 04.03.2015 |
| | | CN102365855 A | 29.02.2012 |
| | | CN102365855B B | 01.06.2016 |
| | | CN102365853 A | 29.02.2012 |
| | | CN102365853B B | 02.12.2015 |
| | | CN102365847 A | 29.02.2012 |
| | | CN102365847B B | 20.01.2016 |

Form PCT/ISA/210 (patent family annex) (January 2015)

## INTERNATIONAL SEARCH REPORT

Information on patent family members

International application No.

PCT/ES2021/070249

| Patent document cited in the search report | Publication date | Patent family member(s) | Publication date |
|---|---|---|---|
| | | CN102365842 A | 29.02.2012 |
| | | CN102365842B B | 04.03.2015 |
| | | CN102365840 A | 29.02.2012 |
| | | CN102365840B B | 11.02.2015 |
| | | CN102365643 A | 29.02.2012 |
| | | CN102365642 A | 29.02.2012 |
| | | CN102365633 A | 29.02.2012 |
| | | CN102365632 A | 29.02.2012 |
| | | CN102365632B B | 24.06.2015 |
| | | CN102365631 A | 29.02.2012 |
| | | CN102365631B B | 09.09.2015 |
| | | CN102365630 A | 29.02.2012 |
| | | CN102365630B B | 23.11.2016 |
| | | CN102365623 A | 29.02.2012 |
| | | CN102365623B B | 20.03.2013 |
| | | CN102365620 A | 29.02.2012 |
| | | CN102365554 A | 29.02.2012 |
| | | CN102365554B B | 21.01.2015 |
| | | CN102362539 A | 22.02.2012 |
| | | CN102362479 A | 22.02.2012 |
| | | CN102362479B B | 25.11.2015 |
| | | CN102356596 A | 15.02.2012 |
| | | CN102356596B B | 16.12.2015 |
| | | CN102356581 A | 15.02.2012 |
| | | CN102349065 A | 08.02.2012 |
| | | CN102349065B B | 19.10.2016 |
| | | CN102342052 A | 01.02.2012 |
| | | CN102342052B B | 06.01.2016 |
| | | AU2010208565 A1 | 08.09.2011 |
| | | AU2010208558 A1 | 08.09.2011 |
| | | AU2010208557 A1 | 08.09.2011 |
| | | AU2010208557B B2 | 20.03.2014 |
| | | AU2010208556 A1 | 08.09.2011 |
| | | AU2010208554 A1 | 08.09.2011 |
| | | AU2010208553 A1 | 08.09.2011 |
| | | AU2010208553B B2 | 03.12.2015 |
| | | AU2010208552 A1 | 08.09.2011 |
| | | AU2010208552B B2 | 19.05.2016 |
| | | AU2010208551 A1 | 08.09.2011 |
| | | AU2010208551B B2 | 24.09.2015 |
| | | AU2010208547 A1 | 08.09.2011 |
| | | AU2010208546 A1 | 08.09.2011 |
| | | AU2010208546B B2 | 26.11.2015 |
| | | AU2010208545 A1 | 08.09.2011 |
| | | AU2010208545B B2 | 19.09.2013 |
| | | AU2010208544 A1 | 08.09.2011 |
| | | AU2010208544B B2 | 03.12.2015 |
| | | AU2010208543 A1 | 08.09.2011 |
| | | AU2010208489 A1 | 08.09.2011 |

Form PCT/ISA/210 (patent family annex) (January 2015)

EP 4 310 758 A1

## INTERNATIONAL SEARCH REPORT

Information on patent family members

| Patent document cited in the search report | Publication date | Patent family member(s) | Publication date |
|---|---|---|---|
| | | AU2010208489B B2 | 26.05.2016 |
| | | AU2010208488 A1 | 08.09.2011 |
| | | AU2010208488B B2 | 17.12.2015 |
| | | AU2010208486 A1 | 08.09.2011 |
| | | AU2010208486B B2 | 29.10.2015 |
| | | AU2010208485 A1 | 08.09.2011 |
| | | AU2010208485B B2 | 02.06.2016 |
| | | AU2010208484 A1 | 08.09.2011 |
| | | AU2010208484B B2 | 26.11.2015 |
| | | AU2010208483 A1 | 08.09.2011 |
| | | AU2010208483B B2 | 12.05.2016 |
| | | AU2010208317 A1 | 08.09.2011 |
| | | AU2010208317B B2 | 26.05.2016 |
| | | AU2010208316 A1 | 08.09.2011 |
| | | AU2010208316B B2 | 29.10.2015 |
| | | AU2010208314 A1 | 08.09.2011 |
| | | AU2010208314B B2 | 05.11.2015 |
| | | AU2010208297 A1 | 08.09.2011 |
| | | AU2010208297B B2 | 17.12.2015 |
| | | AU2010208296 A1 | 08.09.2011 |
| | | AU2010208296B B2 | 02.04.2015 |
| | | AU2010208294 A1 | 08.09.2011 |
| | | AU2010208183 A1 | 08.09.2011 |
| | | KR20110126638 A | 23.11.2011 |
| | | KR20110124261 A | 16.11.2011 |
| | | KR20110124260 A | 16.11.2011 |
| | | KR101646301B B1 | 05.08.2016 |
| | | KR20110124259 A | 16.11.2011 |
| | | KR101646300B B1 | 12.08.2016 |
| | | KR20110124258 A | 16.11.2011 |
| | | KR20110119763 A | 02.11.2011 |
| | | KR101631345B B1 | 17.06.2016 |
| | | US2011320588 A1 | 29.12.2011 |
| | | US2012297055 A9 | 22.11.2012 |
| | | US2011314145 A1 | 22.12.2011 |
| | | US2012324091 A9 | 20.12.2012 |
| | | KR20110117200 A | 26.10.2011 |
| | | KR20110116192 A | 25.10.2011 |
| | | KR101940815B B1 | 21.01.2019 |
| | | KR20110116191 A | 25.10.2011 |
| | | KR101753413B B1 | 19.07.2017 |
| | | KR20110116190 A | 25.10.2011 |
| | | KR20110116189 A | 25.10.2011 |
| | | KR20110113640 A | 17.10.2011 |
| | | KR20110113192 A | 14.10.2011 |
| | | KR20110110839 A | 07.10.2011 |
| | | KR20110110838 A | 07.10.2011 |
| | | KR20110110837 A | 07.10.2011 |
| | | KR20110110836 A | 07.10.2011 |

Form PCT/ISA/210 (patent family annex) (January 2015)

## INTERNATIONAL SEARCH REPORT

Information on patent family members

| International application No. |
|---|
| PCT/ES2021/070249 |

| Patent document cited in the search report | Publication date | Patent family member(s) | Publication date |
|---|---|---|---|
| | | KR20110110835 A | 07.10.2011 |
| | | KR20110110834 A | 07.10.2011 |
| | | KR20110110833 A | 07.10.2011 |
| | | KR101740068 B1 | 25.05.2017 |
| | | KR20110110832 A | 07.10.2011 |
| | | KR101646810 B1 | 08.08.2016 |
| | | KR20110110831 A | 07.10.2011 |
| | | KR20110110830 A | 07.10.2011 |
| | | KR101602990 B1 | 22.03.2016 |
| | | KR20110110829 A | 07.10.2011 |
| | | KR20110110360 A | 06.10.2011 |
| | | KR101653852 B1 | 02.09.2016 |
| | | KR20110108416 A | 05.10.2011 |
| | | KR101632093 B1 | 20.06.2016 |
| | | US2010199325 A1 | 05.08.2010 |
| | | US8391834 B2 | 05.03.2013 |
| | | US2010198939 A1 | 05.08.2010 |
| | | US8402111 B2 | 19.03.2013 |
| | | US2010198698 A1 | 05.08.2010 |
| | | US8406748 B2 | 26.03.2013 |
| | | US2010197268 A1 | 05.08.2010 |
| | | US8340634 B2 | 25.12.2012 |
| | | US2010197267 A1 | 05.08.2010 |
| | | US8548428 B2 | 01.10.2013 |
| | | US2010197266 A1 | 05.08.2010 |
| | | US8275830 B2 | 25.09.2012 |
| | | US2010195503 A1 | 05.08.2010 |
| | | US8346225 B2 | 01.01.2013 |
| | | WO2010088413 A1 | 05.08.2010 |
| | | WO2010088297 A1 | 05.08.2010 |
| | | WO2010088295 A1 | 05.08.2010 |
| | | WO2010088278 A1 | 05.08.2010 |
| | | WO2010088277 A1 | 05.08.2010 |
| | | WO2010088277 A9 | 04.11.2010 |
| | | WO2010088275 A1 | 05.08.2010 |
| | | WO2010088101 A1 | 05.08.2010 |
| | | WO2010088100 A1 | 05.08.2010 |
| | | WO2010088098 A1 | 05.08.2010 |
| | | WO2010088097 A1 | 05.08.2010 |
| | | WO2010088096 A1 | 05.08.2010 |
| | | WO2010088095 A1 | 05.08.2010 |
| | | WO2010088094 A1 | 05.08.2010 |
| | | WO2010088087 A1 | 05.08.2010 |
| | | WO2010088086 A1 | 05.08.2010 |
| | | WO2010088085 A1 | 05.08.2010 |
| | | WO2010088083 A1 | 05.08.2010 |
| | | WO2010088082 A1 | 05.08.2010 |
| | | WO2010088081 A1 | 05.08.2010 |
| | | WO2010088080 A1 | 05.08.2010 |

Form PCT/ISA/210 (patent family annex) (January 2015)

## INTERNATIONAL SEARCH REPORT

Information on patent family members

International application No.

PCT/ES2021/070249

| Patent document cited in the search report | Publication date | Patent family member(s) | Publication date |
|---|---|---|---|
| | | WO2010088076 A1 | 05.08.2010 |
| | | WO2010088075 A1 | 05.08.2010 |
| | | WO2010088074 A1 | 05.08.2010 |
| | | WO2010088073 A1 | 05.08.2010 |
| | | WO2010088072 A1 | 05.08.2010 |
| | | EP2392121 A1 | 07.12.2011 |
| | | EP2392121 A4 | 27.08.2014 |
| | | EP2392155 A1 | 07.12.2011 |
| | | EP2392155 A4 | 10.09.2014 |
| | | EP2392094 A1 | 07.12.2011 |
| | | EP2392094 A4 | 29.10.2014 |
| | | EP2392182 A1 | 07.12.2011 |
| | | EP2392182 A4 | 14.05.2014 |
| | | EP2391952 A1 | 07.12.2011 |
| | | EP2391952 A4 | 03.09.2014 |
| | | EP2392090 A1 | 07.12.2011 |
| | | EP2392090 A4 | 22.08.2012 |
| | | EP2392088 A1 | 07.12.2011 |
| | | EP2392088 A4 | 31.08.2016 |
| | | EP2392102 A1 | 07.12.2011 |
| | | EP2392102 A4 | 29.10.2014 |
| | | EP2391951 A1 | 07.12.2011 |
| | | EP2391951 A4 | 07.05.2014 |
| | | EP2392109 A1 | 07.12.2011 |
| | | EP2392109 A4 | 21.08.2013 |
| | | EP2392170 A1 | 07.12.2011 |
| | | EP2392170 A4 | 15.10.2014 |
| | | EP2391966 A1 | 07.12.2011 |
| | | EP2391966 A4 | 08.10.2014 |
| | | EP2391977 A1 | 07.12.2011 |
| | | EP2391977 A4 | 21.05.2014 |
| | | EP2391942 A1 | 07.12.2011 |
| | | EP2391942 A4 | 07.08.2013 |
| | | EP2392129 A1 | 07.12.2011 |
| | | EP2392129 A4 | 31.07.2013 |
| | | EP2392154 A1 | 07.12.2011 |
| | | EP2392154 A4 | 31.07.2013 |
| | | EP2391940 A1 | 07.12.2011 |
| | | EP2391940 A4 | 29.10.2014 |
| | | EP2392126 A1 | 07.12.2011 |
| | | EP2392126 A4 | 21.05.2014 |
| | | EP2391950 A1 | 07.12.2011 |
| | | EP2391950 A4 | 31.07.2013 |
| | | EP2392124 A1 | 07.12.2011 |
| | | EP2392124 A4 | 27.08.2014 |
| | | EP2392153 A1 | 07.12.2011 |
| | | EP2392153 A4 | 31.07.2013 |
| | | EP2394181 A1 | 14.12.2011 |
| | | EP2394181 A4 | 27.08.2014 |

Form PCT/ISA/210 (patent family annex) (January 2015)

## INTERNATIONAL SEARCH REPORT

Information on patent family members

International application No.

PCT/ES2021/070249

| Patent document cited in the search report | Publication date | Patent family member(s) | Publication date |
|---|---|---|---|
| | | EP2391965 A1 | 07.12.2011 |
| | | EP2391965 A4 | 20.08.2014 |
| | | EP2391949 A1 | 07.12.2011 |
| | | EP2391949 A4 | 20.08.2014 |
| | | EP2391948 A1 | 07.12.2011 |
| | | EP2391948 A4 | 07.08.2013 |
| | | EP2391947 A1 | 07.12.2011 |
| | | EP2391947 A4 | 31.07.2013 |
| | | US2010192212 A1 | 29.07.2010 |
| | | US8839388 B2 | 16.09.2014 |
| | | US2010192207 A1 | 29.07.2010 |
| | | US2010192170 A1 | 29.07.2010 |
| | | US2010192120 A1 | 29.07.2010 |
| | | US8270952 B2 | 18.09.2012 |
| | | US2010191847 A1 | 29.07.2010 |
| | | US8583781 B2 | 12.11.2013 |
| | | US2010191846 A1 | 29.07.2010 |
| | | US8799451 B2 | 05.08.2014 |
| | | US2010191613 A1 | 29.07.2010 |
| | | US8229812 B2 | 24.07.2012 |
| | | US2010191612 A1 | 29.07.2010 |
| | | US11134102 B2 | 28.09.2021 |
| | | US2010191604 A1 | 29.07.2010 |
| | | US8331901 B2 | 11.12.2012 |
| | | US2010191576 A1 | 29.07.2010 |
| | | US8321526 B2 | 27.11.2012 |
| | | US2010191575 A1 | 29.07.2010 |
| | | US8250207 B2 | 21.08.2012 |
| | | US2010190470 A1 | 29.07.2010 |
| | | US8839387 B2 | 16.09.2014 |
| | | US2010188995 A1 | 29.07.2010 |
| | | US8630192 B2 | 14.01.2014 |
| | | US2010188994 A1 | 29.07.2010 |
| | | US8023425 B2 | 20.09.2011 |
| | | US2010188993 A1 | 29.07.2010 |
| | | US2010188992 A1 | 29.07.2010 |
| | | US8675507 B2 | 18.03.2014 |
| | | US2010188991 A1 | 29.07.2010 |
| | | US9137739 B2 | 15.09.2015 |
| | | US2010188990 A1 | 29.07.2010 |
| | | US8355337 B2 | 15.01.2013 |
| | | US2010188975 A1 | 29.07.2010 |
| | | US8270310 B2 | 18.09.2012 |
| | | WO2010088298 A1 | 05.08.2010 |

Form PCT/ISA/210 (patent family annex) (January 2015)